# EUROPÄISCHE PATENTANMELDUNG

(11) **EP 2 570 197 A1**
(43) Veröffentlichungstag der Anmeldung: **20.03.2013**
(21) Anmeldenummer: 11181742.5
(22) Anmeldetag: 19.09.2011
(51) Int. Cl.: B05D 7/14, C09D 5/08, C23C 28/00, C23C 22/83

(54) **Verfahren zur Beschichtung von Leichtmetallfelgen**

(71) Anmelder: BASF SE, 67056 Ludwigshafen (DE)
(72) Erfinder: Menzel, Klaus, 67069 Ludwigshafen (DE); Beck, Erich, 68526 Ladenburg (DE); Pietschmann, Judith, 4500 Solothurn (CH)

(57) **Zusammenfassung**

Die vorliegende Erfindung betrifft ein Verfahren zur Beschichtung von Leichtmetallfelgen, Beschichtungsmassen zur Verwendung in diesem Verfahren sowie die so erhaltenen beschichteten Leichtmetallfelgen.

## Beschreibung

Die vorliegende Erfindung betrifft ein Verfahren zur Beschichtung von Leichtmetallfelgen, Beschichtungsmassen zur Verwendung in diesem Verfahren sowie die so erhaltenen beschichteten Leichtmetallfelgen.

Typischerweise werden Leichtmetallfelgen zur Lackierung mit Pulverlacken zur Grundierung beschichtet, die als Pulver aufgetragen, getrocknet, zur Filmbildung bei erhöhter Temperatur aufgeschmolzen und anschließend gehärtet werden.

Nachteilig bei dieser Verfahrensweise der Lackierung ist einerseits, daß für Trocknung und Aufschmelzen viel Zeit, in einem kontinuierlichen Verfahren also Förderstrecke, aufgewandt werden muß, was die Taktzeit in der Lackierung verringert bzw. in einem kontinuierlichen Verfahren die Förderstrecke verlängert.

Andererseits erfordern Trocknung, Aufschmelzen und Einbrennen einer Pulverlackschicht, die in der Regel die Dicke lediglich eines Bruchteils eines Millimeters aufweist, im Ofen das Aufheizen des gesamten Felgenkörpers. Somit wird für diesen Vorgang wesentlich mehr Energie aufgewandt, als für die eigentliche Pulverlackschicht erforderlich ist. Zudem wirkt sich die hohe thermische Belastung negativ auf die mechanische Stabilität (Metallgefüge) aus, was sich in der Ausbildung von Poren oder sogar Haarrissen im Felgenkörper zeigen kann, wobei solche Felgenkörper als Ausschuß aussortiert werden müssen.

Auf die Pulverlackgrundierung werden weitere Schichten (typischerweise Basislack und Klarlack) lösungsmittelhaltigen Lackes mit einem organischen Lösungsmittel aufgetragen. Diese setzen bei der Trocknung dieses Lösungsmittel aus der Lackschicht frei, was Emissionen von flüchtigen organischen Verbindungen (VOC) zur Folge hat und zahlreiche arbeitssicherheits-und umwelttechnische Maßnahmen erfordert.

Die Aufgabe der vorliegenden Erfindung bestand also darin ein Verfahren zur Beschichtung von Leichtmetallfelgen zur Verfügung zu stellen, in dem der Energie- und/oder Zeitbedarf für Trocknung, Filmbildung und/oder Härtung reduziert werden kann und/oder der Einsatz flüchtiger organischer Verbindungen verringert werden kann.

Die Aufgabe wurde gelöst durch ein Verfahren zur Beschichtung von Leichtmetallfelgen, in dem man einen mechanisch bearbeiteten Rohling einer Leichtmetallfelge mit mindestens einer Beschichtungsmasse beschichtet, die radikalisch polymerisierbare reaktive Gruppen enthält, und diese Beschichtungsmasse durch Strahlung härtet.

Durch erfindungsgemäße Härtung der Beschichtungsmasse mittels Strahlung kann der zeitliche Aufwand für die Härtung im Vergleich zum Einbrennen deutlich verkürzt werden. Ferner ist es ausreichend lediglich die Beschichtungsmasse per Strahlung zu härten, so daß der energetische Aufwand des Aufheizens des gesamten Felgenkörpers im herkömmlichen Verfahren sowie die thermische Beanspruchung entfällt.

Die Leichtmetallsubstrate sind in der Regel Aluminiumgußlegierungen, die neben Aluminium als Hauptkomponente nebengeordnete Mengen von Silizium, untergeordnete Mengen (in der Regel deutlich unter 1 Gew%) an beispielsweise, Magnesium, Titan und/oder Eisen sowie nicht mehr als Spuren (in der Regel deutlich unter 0,1 Gew%) an übrigen Komponenten, beispielsweise Strontium, Mangan, Zink, Zinn, Kupfer, Nickel, Bor, Calzium, Natrium und/oder Phosphor aufweisen.

Bevorzugt handelt es sich dabei um Aluminiumgußlegierungen mit einem Gehalt an Silizium von nicht mehr als 15 Gew%, besonders bevorzugt von 5 bis 15 und ganz besonders bevorzugt von 5 bis 13 Gew%. Im Einzelfall sind auch Aluminiumschmiedelegierungen mit einem Gehalt an Silizium von unter 5 Gew% denkbar, wenn auch weniger bevorzugt.

Weiterhin bevorzugt sind Aluminiumgußlegierungen mit einem Gehalt an Kupfer unter 0,1, besonders bevorzugt unter 0,05 und ganz besonders bevorzugt unter 0,03 Gew%.

Nach dem Guß werden die Rohlinge in der Regel gereinigt, von etwaigen Gußrändern und -graten befreit und mechanisch für ihren Sitz vorbereitet, d.h. Bohrungen für die Radbolzen (Lochkreisbohrungen) und Achsnaben (Anlagefläche) gesetzt, das Felgenbett gedreht und die Felgen zentriert.

Anschließend wird in der Regel die Oberfläche mit einer Konversionsbeschichtung versehen, bevorzugt wird die Oberfläche einer Zink-Phosphatierung oder Zirconiumdioxid-Abscheidung unterzogen oder mit Chrom(V1)-, Chrom(III)- oder Titan-Komplexen behandelt. Denkbar sind auch Konversionsbeschichtungen, die frei von toxischen Schwermetallen sind, die z.B. organische Silanpolymere enthalten, beispielsweise wie beschrieben in DE 10 2009 001372 A1.

Die beispielsweise so behandelten mechanisch bearbeiteten Rohlinge können in das erfindungsgemäße Verfahren eingesetzt werden. Dabei werden bevorzugt die Lochkreisbohrungen vor der Beschichtung zumindest teilweise abgedeckt, damit die Stellen der Felgen, an denen die Radbolzen anliegen, unlackiert bleiben.

In einer bevorzugten Ausführungsform werden die mechanisch bearbeiteten Rohlinge mit mindestens zwei Schichten, bevorzugt mit mindestens drei Schichten von jeweils unterschiedlichen Beschichtungsmassen beschichtet.

Im Falle von drei Schichten übernehmen diese die Funktion von Grundierung (A), Basislack (B) und Klarlack (C) und werden in dieser Reihenfolge aufgetragen, wobei jede dieser drei Schichten ein- oder mehrmals aufgebracht werden kann und die Beschichtungsmassen in jeder Schicht gleich oder verschieden sein können. Zwischen den einzelnen Auftragungen können die Schichten teilweise oder vollständig gehärtet werden, es kann jedoch auch jeweils ausreichend sein, lediglich zu trocknen und optional nicht mehr als teilweise härtet und eine vollständige Härtung erst abschließend durchzuführen. Denkbar ist auch ein Auftragen einer Schicht Beschichtungsmasse auf einer ungetrockneten und ungehärteten darunterliegenden Schicht.

In einer bevorzugten Ausführungsform der vorliegenden Erfindung handelt es sich zumindest bei der außen liegenden Klarlackschicht um eine strahlungshärtbare Beschichtungsmasse mit radikalisch polymerisierbare reaktive Gruppen.

In einer weiteren bevorzugten Ausführungsform der vorliegenden Erfindung handelt es sich zumindest bei der Grundierung zumindest teilweise, bevorzugt vollständig um eine strahlungshärtbare Beschichtungsmasse mit radikalisch polymerisierbare reaktive Gruppen.

In einer besonders bevorzugten Ausführungsform der vorliegenden Erfindung wird die Leichtmetallfelge mit mindestens zwei unterschiedlichen strahlungshärtbaren Beschichtungsmassen mit radikalisch polymerisierbaren reaktiven Gruppen beschcihtet, ganz besonders bevorzugt handelt es sich dabei bei Grundierung und Klarlackschicht zumindest teilweise, bevorzugt vollständig um strahlungshärtbaren Beschichtungsmassen.

In einer weiteren besonders bevorzugten Ausführungsform der vorliegenden Erfindung handelt es sich sowohl bei der Grundierung, als auch bei Basislack und Klarlack um strahlungshärtbare Beschichtungsmassen.

### Grundierung (A)

Die Grundierungsschicht bedeckt bevorzugt die gesamte Felge mit Ausnahme der Anlagefläche und der Lochkreisbohrungen mit dem Ziel, einen Korrosionsschutz und/oder Steinschlagschutz zu bewirken.

Die Grundierung (A) weist in der Regel eine Trockenschichtdicke von 100 bis 200 µm, bevorzugt 120 bis 180 µm auf und ist ihrerseits aus mindestens einer Schicht aufgebaut, bevorzugt aus ein bis vier, besonders bevorzugt aus zwei oder drei und ganz besonders bevorzugt aus drei Schichten (A1) bis (A3), die jeweils eine Schichtdicke von 20 bis 100 µm, bevorzugt von 50 bis 70 µm aufweisen.

Exemplarisch sei eine Grundierung (A) mit drei Schichten (A1) bis (A3) beschrieben:

Bei den Bindemitteln in den Beschichtungsmassen für diese Schichten handet es sich in einer bevorzugten Ausführungsform um solche, die vollständig strahlungshärtbar sind und keine wesentlichen Anteile an organischen Lösungsmitteln enthalten.

Bei der Beschichtungsmasse für die Schicht (A1) handelt es sich bevorzugt um eine strahlungshärtbare Beschichtungsmasse enthaltend
(A1a) mindestens ein strahlungshärtbares Bindemittel, bevorzugt ausgewählt aus der Gruppe bestehend aus aliphatischen Urethan(meth)acrylaten, aromatischen Urethan(meth)-acrylaten und Epoxy(meth)acrylaten,
(A1b) mindestens einen Reaktivverdünner und
(A1c) bevorzugt mindestens ein Korrosionsschutzpigment und/oder -inhibitor.

In einer bevorzugten Ausführungsform weist die Beschichtungsmasse für die Schicht (A1) eine Säurezahl gemäß DIN EN ISO 3682 (potentiometrisch) von 20 bis 120 mg KOH/g auf, bevorzugt von 40 bis 80 mg KOH/g.

Durch diese bevorzugt Säurezahl kann die Haftung der Schicht (A1) auf der Leichtmetalloberfläche verbessert werden. Dabei ist es unerheblich, ob die Säurezahl auf die Komponente (A1 a) und/oder (A1 b) zurückzuführen ist. Als Säuregruppen bevorzugt sind dabei Carboxygruppen und Phosphonsäuregruppen, bevorzugt sind Carboxygruppen.

In einer weiteren bevorzugten Ausführungsform weist die Beschichtungsmasse für die Schicht (A1) eine Viskosität bei Applikationstemperatur gemäß DIN EN ISO 3219 (Kegel/Platte-System, Geschwindigkeitsgefälle 100 s⁻¹) von 60 bis 1000 mPas auf, bevorzugt von 100 bis 300 mPas.

Aufgabe der Schicht (A1) ist es, Haftung der Beschichtungen auf dem Leichtmetallsubstrat zu vermitteln, Korrosionsschutz zu gewährleisten und durch eine Elastizität einen Schutz gegen Steinschlag.

Die Beschichtungsmasse für die Schicht (A2) kann aufgebaut sein wie die für die Schicht (A1), bevorzugt kann jedoch auf eine bestimmte Säurezahl verzichtet werden, da eine Haftung der Schicht (A2) direkt auf der Leichtmetalloberfläche nicht mehr erforderlich ist, sondern lediglich eine Zwischenhaftung zwischen den Schichten (A1) und (A3).

Somit handelt es sich bei der Beschichtungsmasse für die Schicht (A2) bevorzugt um eine strahlungshärtbare Beschichtungsmasse enthaltend
(A2a) mindestens ein Bindemittel ausgewählt aus der Gruppe bestehend aus aliphatischen Urethan(meth)acrylaten, aromatischen Urethan(meth)acrylaten und Epoxy(meth)acrylaten,
(A2b) mindestens einen Reaktivverdünner und
(A2c) bevorzugt mindestens ein Korrosionsschutzpigment und/oder -inhibitor.

Da die Schichten der Grundierung (A) in einer bevorzugten Ausführungsform auf die gesamte Oberfläche der Felge, also sowohl auf der Sicht- als auch auf der Innenseite aufgebracht werden, die Schichten (B) und (C) jedoch lediglich auf der Sichtseite, stellt die Grundierung auf der Innenseite der Felge die Einzige Beschichtung dar.

Infolgedessen stellt die Schicht (A3) der Grundierung (A) für die Innenseite der Felgen die einzige Schutzschicht gegen den Einfluß von z.B. Öl, Benzin, Bremsflüssigkeit oder Felgenreiniger dar und sollte eine dementsprechende Chemikalienbeständigkeit aufweisen, wie sie üblicherweise in der VDA Richtlinie 621-415 festgelegt ist.

Bevorzugt kann die Beschichtungsmasse für die Schicht (A3) aufgebaut sein wie folgt:
(A3a) mindestens ein Bindemittel ausgewählt aus der Gruppe bestehend aus Epoxy-, Polyester- oder Urethan(meth)acrylaten und
(A3b) mindestens einen Reaktivverdünner.

In einer bevorzugten Ausführungsform können einzelne oder alle dieser Schichten nach Applikation teilweise gehärtet werden, so daß die nächste Schicht auf die unvollständig gehärtete und somit gegebenenfalls leicht klebrige, darunterliegende Schicht aufgetragen wird. Dies hat den Vorteil, daß die Haftung zwischen den einzelnen Schichten verbessert wird.

### Basislack (B)

In der Basislackschicht (B) als farbgebender Schicht befinden sich mindestens ein Pigment und/oder Metallic-Flakes, die für die äußere Erscheinung verantwortlich sind.

Bei der Beschichtungsmasse für den Basislack kann es sich in einer Ausführungsform der vorliegenden Erfindung um eine nicht-strahlungshärtbare, lösungsmittel- oder wasserbasierte, bevorzugt wasserbasierte Einkomponenten- oder Zweikomponentenbeschichtungsmasse, bevorzugt Zweikomponentenbeschichtungsmasse handeln.

In einer anderen Ausführungsform der vorliegenden Erfindung kann es sich um eine wasserbasierte strahlungshärtbare Beschichtungsmasse handeln.

Bevorzugt handelt es sich um eine wasserbasierte Zweikomponentenbeschichtungsmasse.

Relevantes Merkmal der Beschichtungsmasse ist ein Festkörpergehalt zwischen 20 und 80 Gew%, bevorzugt 25 bis 60 und besonders bevorzugt 30 bis 50 Gew%, bezogen auf die nicht-flüchtigen Anteile Bindemittel, Pigment und optional Additive.

In einer bevorzugten Ausführungsform der vorliegenden Erfindung wird die betreffende Beschichtungsmasse nach dem Auftragen im wesentlichen getrocknet, wobei eine Härtung, insbesondere eine vollständige Härtung nicht zwingend erforderlich ist, jedoch durchgeführt werden kann.

Bevorzugte wasserbasierte Zweikomponenten-Polyurethan-Beschichtungsmassen sind solche Beschichtungsmassen, enthaltend mindestens ein Polyisocyanat, wie es beispielsweise beschrieben ist in WO 2011 /061314, Seite 5, Zeile 29 bis Seite 11, Zeile 21, und mindestens eine Polyolkomponente, wie sie beispielsweise beschrieben ist in WO 2011/061314, Seite 12, Zeile 14 bis Seite 17, Zeile 31, was jeweils hiermit per Bezugnahme Bestandteil der vorliegenden Offenbarung sei. Die Wasseremulgierbarkeit der Polyisocyanatkomponente kann erreicht werden durch Zusatz von externen Emulgatoren, also solchen, die im wesentlichen nicht mit der Polyisocyanatkomponente reagieren, oder mit eingebauten Emulgatoren, also Verbindungen, die sowohl hydrophile nichtionische, anionische oder kationische Gruppen tragen als auch mindestens eine gegenüber Isocyanat reaktive Gruppe.

Nichtionische Gruppen sind häufig Polyalkylenoxidether, bevorzugt Polyethylenoxidether, anionische Gruppen können beispielsweise Carboxylat-, Sulfonat-, Phosphonat- oder Phosphatgruppen sein und kationische Gruppen können beispielsweise Ammoniumgruppen sein.

Bevorzugte einkomponentige Beschichtungsmassen sind Celluloseacetobutyrate, beispielsweise solche mit im statistischen Mittel 0,5 bis 2,1 Acetyl- und 2,3 bis 0,6 Butyryl-Gruppen pro Glucose-Einheit, sowie Polyurethandispersionen.

Denkbar, wenn auch weniger bevorzugt, sind auch lösungsmittelbasierte Zweikomponenten-Polyurethan-Beschichtungsmassen, enthaltend mindestens ein Polyisocyanat, wie es beispielsweise beschrieben ist in WO 2011/061314, Seite 5, Zeile 29 bis Seite 11, Zeile 21, und mindestens eine Polyolkomponente, wie sie beispielsweise beschrieben ist in WO 2011/061314, Seite 12, Zeile 14 bis Seite 17, Zeile 31, was jeweils hiermit per Bezugnahme Bestandteil der vorliegenden Offenbarung sei.

Denkbar, wenn auch weniger bevorzugt, kann die Schicht (B) aus einer wasserbasierten strahlungshärtbaren Beschichtungsmasse aufgebaut sein, enthaltend
(B1) mindestens ein wasseremulgierbares strahlungshärtbares Bindemittel, bevorzugt ausgewählt aus der Gruppe bestehend aus aliphatischen Urethan(meth)acrylaten und Polyester(meth)acrylaten,
(B2) mindestens einen Reaktivverdünner,
(B3) mindestens ein Pigment und/oder Effektpigment sowie
(B4) Wasser,
wobei der Anteil der Verbindungen (B1) bis (B3) an der Gesamtmenge der Verbindungen (B1) bis (B3) 20 bis 80 Gew% beträgt.

Die Wasseremulgierbarkeit der Bindemittel kann erreicht werden durch Zusatz von externen Emulgatoren, also solchen, die im wesentlichen nicht in das Bindemittel eingebaut sind, oder bevorzugt mit eingebauten Emulgatoren, also Verbindungen, die chemisch in das Bindemittel eingebaut sind und mindestens einer hydrophile nichtionische, anionische oder kationische Gruppe tragen.

Nichtionische Gruppen sind häufig Polyalkylenoxidether, bevorzugt Polyethylenoxidether, anionische Gruppen können beispielsweise Carboxylat-, Sulfonat-, Phosphonat- oder Phosphatgruppen sein und kationische Gruppen können beispielsweise Ammoniumgruppen sein.

Die beschriebenen Beschichtungsmassen können ein- oder mehrmals auf die bereits bestehende Schicht (A) aufgetragen werden, wobei nach jedem Auftrag getrocknet werden sollte, so daß das Lösungsmittel im wesentlichen aus dem Auftrag entfernt ist. Typische Trocknungsbedingungen sind beispielsweise 5 bis 60 Minuten, bevorzugt 5 bis 45, besonders bevorzugt 10 bis 30 und insbesondere 10 bis 20 Minuten bei einer Temperatur von 40 bis 120, bevorzugt 50 bis 100 und besonders bevorzugt 60 bis 80°C.

Es ist dabei nicht zwingend erforderlich, die gesamte Felge auf diese Temperatur zu erwärmen, es kann auch ausreichend sein, die Trocknung in einem Heißluftstrom oder mittels IR- oder NIR-Strahler durchzuführen, wobei als NIR-Strahlung hier elektromagnetische Strahlung im Wellenlängenbereich von 760 nm bis 2,5 µm, bevorzugt von 900 bis 1500 nm bezeichnet ist.

Denkbar ist auch eine Kältetrocknung, was den Vorteil hätte, daß entferntes zumindest teilweise Lösungsmittel kondensiert werden könnte, was zu einer Verringerung der Emissionen von flüchtigen organischen Verbindungen (VOC) beitragen könnte.

Wichtig ist, daß von dem in der Beschichtungsmasse enthaltenen Lösungsmittel mindestens 75 Gew% durch den Trocknungsvorgang entfernt werden, bevorzugt mindestens 80, besonders bevorzugt mindestens 85, ganz besonders bevorzugt bevorzugt mindestens 90 und insbesondere mindestens 95 Gew%.

Wenn bei der Trocknung bereits eine Härtung der Beschichtungsmasse zumindest teilweise erfolgt, so ist dies nicht nachteilig, sondern durchaus erwünscht. Es ist jedoch nicht zwingend erforderlich, eine vollständige Härtung der aufgetragenen Beschichtungsmassen durchzuführen.

In einer speziellen Ausführungsform der vorliegenden Erfindung kann die beschichtete Felge nach Trocknung und Härtung der Beschichtungsmasse (B), aber vor Aufbringen der Klarlackschicht (C) nochmals mechanisch nachbehandelt werden, indem man an der Außenseite (Sichtseite) der Felgen die Beschichtung beispielsweise durch Drehen, Schleifen und/oder Polieren abträgt und das Metall freilegt. Diese gänzende Metallschicht kontrastiert mit der pigmentierten Beschichtung (B) und kann dann im Folgeschritt direkt mit dem Klarlack (C) beschichtet werden.

### Klarlack (C)

Die Klarlackschicht (C) wird bevorzugt lediglich auf der Außen- / Sichtseite der Felgen aufgetragen.

Die Aufgabe des Klarlacks besteht in einer Kombination der Eigenschaften Witterungsbeständigkeit, Chemikalienbeständigkeit und Kratzfestigkeit.

In einer bevorzugten Ausführungsform handelt es sich auch bei der Beschichtungsmasse für diese Schicht vollständig um eine strahlungshärtbare Beschichtungsmasse mit radikalisch polymerisierbaren reaktiven Gruppen. Gegebenenfalls kann die Beschichtungsmasse bis zu 10 Gew% mindestens eines Lösungsmittels enthalten, wenn dieses als Verlaufshilfsmittel oder als viskositätssenkende Komponente erforderlich ist.

Aufgabe dieser Klarlackschicht ist es, Witterungs- und Chemikalienbeständigkeit sowie Kratzfestigkeit zu bewirken.

In einer bevorzugt Ausführungsform der vorliegenden Erfindung enthält die Beschichtungsmasse für die Schicht (C)
(C1) mindestens ein strahlungshärtbares Bindemittel, bevorzugt ausgewählt aus der Gruppe bestehend aus aliphatischen Urethan(meth)acrylaten und Polyester(meth)acrylaten,
(C2) mindestens einen Reaktivverdünner,
(C3) optional ein oder mehrere lacktypische Additive ausgewählt aus der Gruppe bestehend aus Antioxidantien, Aktivatoren (Beschleuniger), Füllmitteln, Pigmenten, Farbstoffen, antistatische Agentien, Flammschutzmitteln, Verdickern, thixotrope Agentien, oberflächenaktive Agentien, Viskositätsmodifikatoren, Plastifizierern oder Chelatbildnern, bevorzugt ausgewählt aus der Gruppe bestehend aus Lichtschutzmitteln, Glanzhilfsmitteln und Verlaufshilfsmitteln.

In einer besonders bevorzugt Ausführungsform der vorliegenden Erfindung weisen die Beschichtungsmassen für die Schicht (C) eine Doppelbindungsdichte von radikalisch polymerisierbaren reaktiven Gruppen pro Masse Beschichtungsmasse (bezogen auf die Summe der Komponenten (C1) und (C2)) von mindestens 1 mol/kg auf, bevorzugt mindestens 1,5, besonders bevorzugt mindestens 2, ganz besonders bevorzugt mindestens 2,5 und insbesondere mindestens 3 mol/kg. In der Regel ist eine Doppelbindungsdichte von nicht mehr als 8 mol/kg, bevorzugt nicht mehr als 7 und besonders bevorzugt nicht mehr als 6 mol/kg ausreichend.

In einer bevorzugten Ausführungsform weist die Beschichtungsmasse für die Schicht (C) eine Viskosität bei Applikationstemperatur gemäß DIN EN ISO 3219 (Kegel/Platte-System, Geschwindigkeitsgefälle 100 s⁻¹) von 60 bis 1200 mPas auf, bevorzugt von 100 bis 300 mPas. Demgemäß wird die Zusammensetzung aus Komponenten (C1) und (C2) sowie optional Lösungsmittel als Verlaufshilfsmittel (C3) dieser Beschichtungsmasse so gewählt, daß diese angegebene Viskosität erreicht wird.

### Bindemittel

Die strahlungshärtbaren Bindemittel in den Beschichtungsmassen können beispielsweise ausgewählt sein aus der Gruppe bestehend aus
- Polyester(meth)acrylaten
- Polyether(meth)acrylaten
- Urethan(meth)acrylaten
- Epoxy(meth)acrylaten
- (meth)acrylierten Poylacrylaten
- Melamin(meth)acrylaten oder
- Carbonat(meth)acrylaten.

Polyester(meth)acrylate sind die entsprechenden Ester von α,β-ethylenisch ungesättigten Carbonsäuren, bevorzugt von (Meth)acrylsäure, besonders bevorzugt von Acrylsäure mit Polyesterpolyolen.

Polyesterpolyole, sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt:

Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)y-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butan-diol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die gegebenenfalls wie oben beschrieben alkoxyliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12-diol. Weiterhin bevorzugt ist Neopentylglykol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁-bis C₄-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Polyether(meth)acrylate sind die entsprechenden Ester von α,β-ethylenisch ungesättigten Carbonsäuren, bevorzugt von (Meth)acrylsäure, besonders bevorzugt von Acrylsäure mit Polyetherolen.

Bevorzugt handelt es sich bei den Polyetherolen um Polyethylenglykol mit einer Molmasse zwischen 106 und 2000, bevorzugt 106 bis 1500, besonders bevorzugt 106 bis 1000, Poly-1,2-Propandiol mit einer Molmasse zwischen 134 und 1178, Poly-1,3-Pro-pandiol mit einer Molmasse zwischen 134 und 1178 und Polytetrahydrofurandiol mit einem zahlenmittleren Molekulargewicht Mₙ im Bereich von etwa 500 bis 4000, bevorzugt 600 bis 3000, insbesondere 750 bis 2000.

Urethan(meth)acrylate sind z.B. erhältlich durch Umsetzung von Polyisocyanaten mit Hydroxyalkyl(meth)acrylaten oder -vinylethern und gegebenenfalls Kettenverlängerungsmitteln wie Diolen, Polyolen, Diaminen, Polyaminen oder Dithiolen oder Polythiolen.

Beispielhafte Urethan(meth)acrylate enthalten als Aufbaukomponenten im wesentlichen:
(a) mindestens ein organisches aliphatisches, aromatisches oder cycloaliphatisches Di- oder Polyisocyanat,
(b) mindestens eine Verbindung mit mindestens einer gegenüber Isocyanat reaktiven Gruppe und mindestens einer radikalisch polymerisierbaren ungesättigten Gruppe,
(c) gegebenenfalls mindestens eine Verbindung mit mindestens zwei gegenüber Isocyanat reaktiven Gruppen,

Als Komponente (a) kommen beispielsweise aliphatische, aromatische und cycloaliphatische Di- und Polyisocyanate mit einer NCO Funktionalität von mindestens 1,8, bevorzugt 1,8 bis 5 und besonders bevorzugt 2 bis 4 in Frage, sowie deren Isocyanurate, Biurete, Allophanate und Uretdione.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat (1,6-Diisocyanatohexan), Octamethylendüsocyanat, Decamethylendiisocyanat, Dodecamethylendiisocyanat, Tetradecamethylendüsocyanat, Derivate des Lysindiisocyanates, Tetramethylxylylendüsocyanat, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5- trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-Isomerengemische sowie aromatische Diisocyanate wie 2,4- oder 2,6-Toluylendiisocyanat und deren Isomerengemische, m- oder p-Xylylendüsocyanat, 2,4'- oder 4,4'-Diisocyanatodiphenylmethan und deren Isomerengemische, 1,3- oder 1,4-Phenylen-diisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyl-diphenylmethan-4,4'-düsocyanat, Tetramethylxylylendiisocyanat, 1,4-Diisocyanat-obenzoi oder Diphenylether-4,4'-diisocyanat.

Es können auch Gemische der genannten Diisocyanate vorliegen.

Bevorzugt sind Hexamethylendiisocyanat, 1,3-Bis(isocyanatomethyl)cyclohexan, Isophorondiisocyanat und Di(isocyanatocyclohexyl)methan.

Je nachdem, ob das dem Polyisocyanat zugrundeliegende Diisocyanat aromatisch oder nicht aromatisch ist, bezeichnet man das erhaltene Urethan(meth)acrylat als ein aromatisches Urethan(meth)acrylat oder ein aliphatisches Urethan(meth)acrylat.

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretonimin-modifizierte Polyisocyanate von geradlinigen oder verzweigten C₄-C₂₀-Alkylendiisocyanaten, cycloaliphatischen Diisocyanaten mit insgesamt 6 bis 20 C-Atomen oder aromatischen Diisocyanaten mit insgesamt 8 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42) von 10 bis 60 Gew% bezogen auf das Di- und Polyisocyanat(gemisch), bevorzugt 15 bis 60 Gew% und besonders bevorzugt 20 bis 55 Gew%.

Bevorzugt sind aliphatische bzw. cycloaliphatische Di- und Polyisocyanate, z.B. die vorstehend genannten aliphatischen bzw. cycloaliphatischen Diisocyanate, oder deren Mischungen.

Weiterhin bevorzugt sind
1. Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 3 bis 4,5.
2. Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiondiisocyanate können in den Zubereitungen als alleinige Komponente oder im Gemisch mit anderen Polyisocyanaten, insbesondere den unter 1) genannten, eingesetzt werden.
3. Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 3 bis 4,5 auf.
4. Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondüsocyanat mit mehrwertigen Alkoholen wie z.B. Trimethylolpropan, Neopentylglykol, Pentaerythrit, 1,4-Butandiol, 1,6-Hexandiol, 1,3-Propandiol, Ethylenglykol, Diethylenglykol, Glycerin, 1,2-Dihydroxypropan oder deren Gemische erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 1,8 bis 3.
5. Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
6. Uretonimin-modifizierte Polyisocyanate.

Die Polyisocyanate 1) bis 6) können im Gemisch, gegebenenfalls auch im Gemisch mit Diisocyanaten, eingesetzt werden.

Als Komponente (b) kommen Verbindungen in Betracht, die mindestens eine gegenüber Isocyanat reaktive Gruppe und mindestens eine radikalisch polymerisierbare Gruppe tragen.

Gegenüber Isocyanat reaktive Gruppen können z.B. sein -OH, -SH, -NH₂ und -NHR¹, wobei R¹ Wasserstoff oder eine 1 bis 4 Kohlenstoffatome enthaltende Alkylgruppe, wie z.B. Methyl, Ethyl, n-Propyl, iso-Propyl, n-Butyl, iso-Butyl, sek-Butyl oder *tert*-Butyl, bedeutet.

Komponenten (b) können z.B. Monoester von α,β-ungesättigten Carbonsäuren, wie Acrylsäure, Methacrylsäure, Crotonsäure, Itaconsäure, Fumarsäure, Maleinsäure, Acrylamidoglykolsäure, Methacrylamidoglykolsäure oder Vinylether mit Di- oder Polyolen sein, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, 2,2-Bis(4-hydroxycyclohexyl)propan, Glycerin, Trimethylolethan, Trimethylolpropan, Trimethylolbutan, Pentaerythrit, Ditrimethylolpropan, Erythrit, Sorbit, Poly-THF mit einem Molgewicht zwischen 162 und 2000, Poly-1,3-propandiol mit einem Molgewicht zwischen 134 und 400 oder Polyethylenglykol mit einem Molgewicht zwischen 238 und 458. Weiterhin können auch Ester oder Amide der (Meth)acrylsäure mit Aminoalkoholen z. B. 2-Aminoethanol, 2-(Methylamino)ethanol, 3-Amino-1-propanol, 1-Amino-2-propanol oder 2-(2-Aminoethoxy)ethanol, 2-Mercaptoethanol oder Polyaminoalkane, wie Ethylendiamin oder Diethylentriamin, oder Vinylessigsäure verwendet werden.

Weiterhin sind auch ungesättigte Polyether- oder Polyesterole oder Polyacrylatpolyole mit einer mittleren OH-Funktionalität von 2 bis 10 geeignet.

Beispiele für Amide ethylenisch ungesättigter Carbonsäuren mit Aminoalkoholen sind Hydroxyalkyl(meth)acrylamide wie N-Hydroxymethylacrylamid, N-Hydroxymethylmethacrylamid, N-Hydroxyethylacrylamid, N-Hydroyxethylmethacrylamid, 5-Hydroxy-3-oxapentyl(meth)acrylamid, N-Hydroxyalkylcrotonamide wie N-Hydroxymethylcrotonamid oder N-Hydroxyalkylmaleinimide wie N-Hydroxyethylmaleinimid.

Bevorzugt verwendet werden 2-Hydroxyethyl(meth)acrylat, 2- oder 3-Hydroxypropyl(meth)-acrylat, 1,4-Butandiolmono(meth)acrylat, Neopentylglykolmono(meth)acrylat, 1,5-Pentan-diolmono(meth)acrylat, 1,6-Hexandiolmono(meth)acrylat, Glycerinmono- und di(meth)acrylat, Trimethylolpropanmono- und di(meth)acrylat, Pentaerythritmono-, -di- und -tri(meth)acrylat sowie 4-Hydroxybutylvinylether, 2-Aminoethyl(meth)acrylat, 2-Aminopropyl(meth)acrylat, 3-Amino-propyl(meth)acrylat, 4-Aminobutyl(meth)acrylat, 6-Aminohexyl(meth)acrylat, 2-Thioethyl(meth)-acrylat, 2-Aminoethyl(meth)acrylamid, 2-Aminopropyl(meth)acrylamid, 3-Aminopropyl(meth)-acrylamid, 2-Hydroxyethyl(meth)acrylamid, 2-Hydroxypropyl(meth)acrylamid oder 3-Hydroxypropyl(meth)acrylamid. Besonders bevorzugt sind 2-Hydroxyethylacrylat, 2-Hydroxyethylmethacrylat, 2- oder 3-Hydroxypropylacrylat, 1,4-Butandiolmonoacrylat und 3-(Acryloyloxy)-2-hydroxypropylmethacrylat.

Als Komponente (c) kommen Verbindungen in Betracht, die mindestens zwei gegenüber Isocyanat reaktive Gruppen, beispielsweise -OH, -SH, -NH₂ oder-NHR², worin R² darin unabhängig voneinander Wasserstoff, Methyl, Ethyl, iso-Propyl, n-Propyl, n-Butyl, iso-Butyl, *sek*-Butyl oder tert-Butyl bedeuten kann, aufweisen.

Dies sind bevorzugt Diole oder Polyole, wie 2 bis 20 Kohlenstoffatome aufweisende Kohlenwasserstoffdiole, z.B. Ethylenglycol, 1,2-Propandiol, 1,3-Propandiol, 1,1-Dimethylethan-1,2-diol, 1,6-Hexandiol, 1,10-Dekandiol, Bis-(4-hydroxycyclohexan) isopropyliden, Tetramethylcyclobutandiol, 1,2-, 1,3- oder 1,4-Cyclohexandiol, Cyclooctandiol, Norbornandiol, Pinandiol, Decalindiol, etc. deren Ester mit kurzkettigen Dicarbonsäuren, wie Adipinsäure, Cyclohexandicarbonsäure, deren Carbonate, hergestellt durch Reaktion der Diole mit Phosgen oder durch Umesterung mit Dialkyl- oder Diarylcarbonaten, oder aliphatische Diamine, wie Methylen-, und Isopropyliden-bis-(cyclohexylamin), Piperazin, 1,2-, 1,3- oder 1,4-Diaminocyclohexan, 1,2-, 1,3- oder 1,4-Cyclohexan-bis-(methylamin), etc., Dithiole oder mehrfunktionelle Alkohole, sekundäre oder primäre Aminoalkohole, wie Ethanolamin, Diethanolamin, Monopropanolamin, Dipropanolamin etc. oder Thioalkohole, wie Thioethylenglykol.

Weiterhin sind denkbar Diethylenglykol, Triethylenglykol, Dipropylenglykol, Tripropylenglykol, Neopentylglykol, Pentaerythrit, 1,2- und 1,4-Butandiol, 1,5-Pentandiol, 2-Methyl-1,5-pentandiol, 2-Ethyl-1,4-butandiol, 1,2-, 1,3- und 1,4-Dimethylolcyclohexan, 2,2-Bis(4-hydroxycyclohexyl)-propan, Glycerin, Trimethylolethan, Trimethylolpropan, Trimethylolbutan, Dipentaerythrit, Ditrimethylolpropan, Erythrit und Sorbit, 2-Aminoethanol, 3-Amino-1-propanol, 1-Amino-2-propanol oder 2-(2-Aminoethoxy)ethanol, Bisphenol A, oder Butantriol.

Weiterhin sind auch ungesättigte Polyether- oder Polyesterole oder Polyacrylatpolyole mit einer mittleren OH-Funktionalität von 2 bis 10 geeignet, sowie Polyamine, wie z.B. Polyethylenimin oder freie Amingruppen enthaltende Polymere von z.B. Poly-N-vinylformamid.

Besonders geeignet sind hier die cycloaliphatischen Diole, wie z.B. Bis-(4-hydroxycyclohexan) isopropyliden, Tetramethylcyclobutandiol, 1,2-, 1,3- oder 1,4-Cyclohexandiol, Cyclooctandiol oder Norbornandiol.

Die beispielhaften verwendbaren Urethan(meth)acrylate werden durch Reaktion der Komponenten (a), (b) und (c) miteinander erhalten.

Dabei ist die molare Zusammensetzung (a):(b):(c) pro 3 mol reaktive Isocycanatgruppen in (a) in der Regel wie folgt:
(b) 0,5 - 3,0, bevorzugt 0,8 - 2,5, besonders bevorzugt 1,0 - 2,2 und insbesondere 1,4 - 1,8 mol gegenüber Isocyanat reaktive Gruppen,
(c) 0 - 2,0, bevorzugt 0,1 - 1,8, besonders bevorzugt 0,5 - 1,5 und insbesondere 0,8 - 1,3 mol an gegenüber Isocyanat reaktiven Gruppen.

Die Bildung des Addukts aus isocyanatgruppenhaltiger Verbindung und der Verbindung, die gegenüber Isocyanatgruppen reaktive Gruppen enthält erfolgt in der Regel durch Mischen der Komponenten in beliebiger Reihenfolge, gegebenenfalls bei erhöhter Temperatur.

Bevorzugt wird dabei die Verbindung, die gegenüber Isocyanatgruppen reaktive Gruppen enthält, zu der isocyanatgruppenhaltigen Verbindung zugegeben, bevorzugt in mehreren Schritten.

Besonders bevorzugt wird die isocyanatgruppenhaltige Verbindung vorgelegt und die Verbindungen, die gegenüber Isocyanat reaktive Gruppen enthalten, zugegeben. Insbesondere wird die isocyanatgruppenhaltige Verbindung (a) vorgelegt und daraufhin (b) zugegeben. Nachfolgend können gegebenenfalls gewünschte weitere Komponenten zugegeben werden.

In der Regel wird die Reaktion bei Temperaturen zwischen 5 und 100 °C, bevorzugt zwischen 20 bis 90 °C und besonders bevorzugt zwischen 40 und 80°C und insbesondere zwischen 60 und 80 °C durchgeführt.

Bevorzugt wird dabei unter wasserfreien Bedingungen gearbeitet. Wasserfrei bedeutet dabei, daß der Wassergehalt im Reaktionssystem nicht mehr als 5 Gew% beträgt, bevorzugt nicht mehr als 3 Gew% und besonders bevorzugt nicht mehr als 1 Gew%.

Um eine Polymerisation der polymerisationsfähigen Doppelbindungen zurückzudrängen, wird bevorzugt unter einem sauerstoffhaltigen Gas gearbeitet, besonders bevorzugt Luft oder Luft-Stickstoff-Gemische.

Als sauerstoffhaltiges Gas können bevorzugt Luft oder ein Gemisch aus Sauerstoff oder Luft und einem unter den Einsatzbedingungen inerten Gas verwendet werden. Als inertes Gas können Stickstoff, Helium, Argon, Kohlenmonoxid, Kohlendioxid, Wasserdampf, niedere Kohlenwasserstoffe oder deren Gemische verwendet werden.

Der Sauerstoffgehalt des sauerstoffhaltigen Gases kann beispielsweise zwischen 0,1 und 22 Vol%, bevorzugt von 0,5 bis 20 betragen, besonders bevorzugt 1 bis 15, ganz besonders bevorzugt 2 bis 10 und insbesondere 4 bis 10 Vol%. Selbstverständlich können, falls gewünscht, auch höhere Sauerstoffgehalte eingesetzt werden.

Die Reaktion kann auch in Gegenwart eines inerten Solvens durchgeführt werden, z.B. Aceton, /so-butyl-methylketon, Toluol, Xylol, Butylacetat oder Ethoxyethylacetat. Bevorzugt wird die Reaktion jedoch in Abwesenheit eines Solvens durchgeführt.

Die Urethan(meth)acrylate haben vorzugsweise ein zahlenmittleres Molgewicht Mₙ von 1000 bis 20 000, insbesondere von 1000 bis 10 000 besonders bevorzugt 1000 bis 4000 g/mol (bestimmt durch Gelpermeationschromatographie mit Tetrahydrofuran und Polystyrol als Standard).

Die Urethan(meth)acrylate haben vorzugsweise einen Gehalt von 1 bis 5, besonders bevorzugt von 2 bis 4 Mol (Meth)acrylgruppen pro 1000 g Urethan(meth)acrylat.

Die Urethanvinylether haben vorzugsweise einen Gehalt von 1 bis 5, besonders bevorzugt von 2 bis 4 Mol Vinylethergruppen pro 1000 g Urethanvinylether.

Epoxid(meth)acrylate sind erhältlich durch Umsetzung von Epoxiden mit (Meth)acrylsäure. Als Epoxide in Betracht kommen z.B epoxidierte Olefine, aromatische Glycidylether oder aliphatische Glycidylether, bevorzugt solche von aromatischen oder aliphatischen Glycidylethern.

Epoxidierte Olefine können beispielsweise sein Ethylenoxid, Propylenoxid, *iso*-Butylenoxid, 1-Butenoxid, 2-Butenoxid, Vinyloxiran, Styroloxid oder Epichlorhydrin, bevorzugt sind Ethylenoxid, Propylenoxid, iso-Butylenoxid, Vinyloxiran, Styroloxid oder Epichlorhydrin, besonders bevorzugt Ethylenoxid, Propylenoxid oder Epichlorhydrin und ganz besonders bevorzugt Ethylenoxid und Epichlorhydrin.

Aromatische Glycidylether sind z.B. Bisphenol-A-diglycidylether, Bisphenol-F-diglycidylether, Bisphenol-B-diglycidylether, Bisphenol-S-diglycidylether, Hydrochinondiglycidylether, Alkylierungsprodukte von Phenol/Dicyclopentadien, z.B. 2,5-bis[(2,3-Epoxypropoxy)phenyl]octahydro-4,7-methano-5H-inden) (CAS-Nr. [13446-85-0]), Tris[4-(2,3-epoxypropoxy)phenyl]methan Isomere )CAS-Nr. [66072-39-7]), Phenol basierte Epoxy Novolake (CAS-Nr. [9003-35-4]) und Kresol basierte Epoxy Novolake (CAS-Nr. [37382-79-9]).

Aliphatische Glycidylether sind beispielsweise 1,4-Butandioldiglycidether, 1,6-Hexandioldiglycidylether, Trimethylolpropantriglycidylether, Pentaerythrittetraglycidylether, 1,1,2,2-tetrakis[4-(2,3-epoxypropoxy)phenyl]ethan (CAS-Nr. [27043-37-4]), Diglycidylether von Polypropylenglykol α,ω-bis(2,3-epoxypropoxy)poly(oxypropylen) (CAS-Nr. [16096-30-3]) und von hydriertem Bisphenol A (2,2-bis[4-(2,3-epoxypropoxy)cyclohexyl]propan, CAS-Nr. [13410-58-7]).

Die Epoxid(meth)acrylate und -vinylether haben vorzugsweise ein zahlenmittleres Molgewicht Mₙ von 200 bis 20000, besonders bevorzugt von 200 bis 10000 g/mol und ganz besonders bevorzugt von 250 bis 3000 g/mol; der Gehalt an (Meth)acryl- oder Vinylethergruppen beträgt vorzugsweise 1 bis 5, besonders bevorzugt 2 bis 4 pro 1000 g Epoxid(meth)acrylat oder Vinyletherepoxid (bestimmt durch Gelpermeationschromatographie mit Polystyrol als Standard und Tetrahydrofuran als Elutionsmittel).

(Meth)acrylierte Poylacrylate sind die entsprechenden Ester von α,β-ethylenisch ungesättigten Carbonsäuren, bevorzugt von (Meth)acrylsäure, besonders bevorzugt von Acrylsäure mit Polyacrylatpolyolen.

Derartige Polyacrylatpolyole weisen bevorzugt ein Molekulargewicht Mₙ von mindestens 1000, besonders bevorzugt mindestens 2000 und ganz besonders bevorzugt mindestens 5000 g/mol auf. Das Molekulargewicht Mₙ kann beispielsweise bis 200.000, bevorzugt bis zu 100.000, besonders bevorzugt bis zu 80.000 und ganz besonders bevorzugt bis zu 50.000 g/mol betragen.

Bevorzugte OH-Zahlen der Polyacrylatpolyole, gemessen gemäß DIN 53240-2, sind 15-250 mg KOH/g, bevorzugt 80-160 mg KOH/g.

Zusätzlich können die Polyacrylatpolyole eine Säurezahl gemäß DIN EN ISO 3682 bis 200 mg KOH/g, bevorzugt bis 150 und besonders bevorzugt bis 100 mg KOH/g aufweisen.

Bei den Polyacrylatpolyolen handelt es sich um Copolymere von mindestens einem (Meth)Acrylsäureester mit mindestens einer Verbindung mit mindestens einer, bevorzugt genau einer Hydroxygruppe und mindestens einer, bevorzugt genau einer (Meth)Acrylatgruppe.

Letztere können beispielsweise Monoester von α,β-ungesättigten Carbonsäuren, wie Acrylsäure, Methacrylsäure (in dieser Schrift kurz als "(Meth)acrylsäure" bezeichnet), mit Di- oder Polyolen, die vorzugsweise 2 bis 20 C-Atome und wenigstens zwei Hydroxygruppen aufweisen, wie Ethylenglykol, Diethylenglykol, Triethylenglykol, 1,2-Propy-lenglykol, 1,3-Propylenglykol, 1,1-Dimethyl-1,2-Ethandiol, Dipropylenglykol, Triethylen-glykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-Propandiol, 2-Methyl-1,3-Propandiol, 2-Butyl-2-ethyl-1,3-Propandiol, 1,6-Hexandiol, 2-Methyl-1,5-pentandiol, 2-Ethyl-1,4-butandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Bis(hy-roxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipenta-rythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem Molgewicht zwischen 162 und 4500, bevorzugt 250 bis 2000, Poly-1,3-propandiol oder Polypropylenglykol mit einem Molgewicht zwischen 134 und 2000 oder Polyethylenglykol mit einem Molgewicht zwischen 238 und 2000 sein.

Bevorzugt sind 2-Hydroxyethylacrylat, 2-Hydroxyethylmethacrylat, 2- oder 3-Hydroxyropylacrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat.

Die hydroxygruppentragenden Monomere werden in die Copolymerisation im Gemisch mit anderen polymerisierbaren, bevorzugt radikalisch polymerisierbaren Monomeren, eingesetzt, bevorzugt solche, welche zu mehr als 50 Gew% aus C₁-C₂₀-, bevorzugt C₁-bis C₄-Alkyl(meth)-acrylat, (Meth)acrylsäure, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymeren, die zu mehr als 60 Gew% aus C₁-C₁₀-Alkyl-(meth)acrylaten, Styrol, Vinylimidazol oder deren Mischungen bestehen.

Darüber können die Polymere hydroxyfunktionelle Monomere entsprechend dem obigen Hydroxygruppengehalt und gegebenenfalls weitere Monomere enthalten, z.B. (Meth)acrylsäureglycidylepoxyester, ethylenisch ungesättigte Säuren, insbesondere Carbonsäuren, Säureanhydride oder Säureamide.

Beispiele für geeignete ethylenisch ungesättigte Melaminharze sind die Umsetzungsprodukte von Melamin/Formaldehyd-Kondensationsprodukten mit OH-Gruppen enthaltenden, ethylenisch ungesättigten Verbindungen, ethylenisch ungesättigten Dicarbonsäureanhydriden oder mit den Amiden ethylenisch ungesättigter Monocarbonsäuren. Geeignete Melamin/Formaldehyd-Kondensationsprodukte sind insbesondere Hexamethylolmelamin (HMM) und Hexamethoxymethylolmelamin (HMMM). Geeignete OH-Gruppen enthaltende Verbindungen umfassen beispielsweise die Hydroxyalkylester ethylenisch ungesättigter Carbonsäuren, insbesondere der Acrylsäure und der Methacrylsäure. Ferner kommen für die Umsetzung mit HMM ethylenisch ungesättigte Alkohole, wie Allylalkohol oder Crotylalkohol, oder ethylenisch ungesättigte Dicarbonsäureanhydride, wie Maleinsäureanhydrid, in Frage. Ferner können sowohl HMM als auch HMMM mit den Amiden ethylenisch ungesättigter Carbonsäuren, z. B. Acrylsäureamid oder Methacrylsäureamid, zu ethylenisch ungesättigten Melaminharzen modifiziert werden. Derartige Melaminharze sind dem Fachmann bekannt und beispielsweise in P.K.T. Oldring, S. 208 bis S. 214 sowie in der EP-A 464 466 und der DE-A 25 50 740 beschrieben, auf die wegen weiterer Details hiermit verwiesen wird.

Carbonat(meth)acrylate sind ebenfalls mit verschiedenen Funktionalitäten erhältlich.

Das zahlenmittlere Molekulargewicht Mₙ der Carbonat(meth)acrylate ist vorzugsweise kleiner 3000 g/mol, besonders bevorzugt kleiner 1500 g/mol, besonders bevorzugt kleiner 800 g/mol (bestimmt durch Gelpermeationschromatgraphie mit Polystyrol als Standard, Lösemittel Tetrahydrofuran).

Die Carbonat(meth)acrylate sind in einfacher Weise erhältlich durch Umesterung von Kohlensäureestern mit mehrwertigen, vorzugsweise zweiwertigen Alkoholen (Diolen, z.B. Hexandiol) und anschließende Veresterung der freien OH-Gruppen mit (Meth)acrylsäure oder auch Umesterung mit (Meth)acrylsäureestern, wie es z.B. in EP-A 92 269 beschrieben ist. Erhältlich sind sie auch durch Umsetzung von Phosgen, Harnstoffderivaten mit mehrwertigen, z.B. zweiwertigen Alkoholen.

In analoger Weise sind auch Vinylethercarbonate erhältlich, indem man einen Hydroxyalkylvinylether mit Kohlensäureestern sowie gegebenenfalls zweiwertigen Alkoholen umsetzt.

Denkbar sind auch (Meth)acrylate oder Vinylether von Polycarbonatpolyolen, wie das Reaktionsprodukt aus einem der genannten Di- oder Polyole und einem Kohlensäureester sowie einem hydroxylgruppenhaltigen (Meth)acrylat oder Vinylether.

Geeignete Kohlensäureester sind z.B. Ethylen-, 1,2- oder 1,3-Propylencarbonat, Kohlensäuredimethyl-, -diethyl- oder-dibutylester.

Geeignete hydroxygruppenhaltige (Meth)acrylate sind beispielsweise 2-Hydroxyethyl-(meth)acrylat, 2- oder 3-Hydroxypropyl(meth)acrylat, 1,4-Butandiolmono(meth)acrylat, Neopen-tylglykolmono(meth)acrylat, Glycerinmono- und di(meth)acrylat, Trimethylolpropanmono- und di(meth)acrylat sowie Pentaerythritmono-, -di- und -tri(meth)acrylat.

Geeignete hydroxygruppenhaltige Vinylether sind z.B. 2-Hydroxyethylvinylether und 4-Hydroxybutylvinylether.

Besonders bevorzugte Carbonat(meth)acrylate sind solche der Formel: 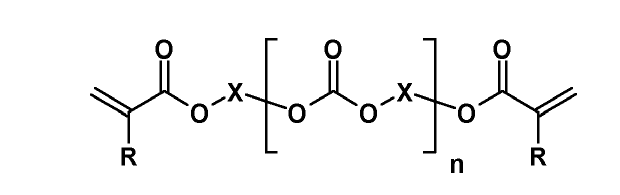 worin R für H oder CH₃, X für eine C₂-C₁₈ Alkylengruppe und n für eine ganze Zahl von 1 bis 5, vorzugsweise 1 bis 3 steht.

R steht vorzugsweise für H und X steht vorzugsweise für C₂- bis C₁₀-Alkylen, beispielsweise 1,2-Ethylen, 1,2-Propylen, 1,3-Propylen, 1,4-Butylen oder 1,6-Hexylen, besonders bevorzugt für C₄- bis C₈-Alkylen. Ganz besonders bevorzugt steht X für C₆-Alkylen.

Vorzugsweise handelt es sich bei den Carbonat(meth)acrylaten um aliphatische Carbonat(meth)acrylate.

### Reaktivverdünner

Als Reaktivverdünner werden im Rahmen der vorliegenden Schrift solche Verbindungen mit in der Regel ein bis vier radikalisch polymerisierbaren reaktiven Gruppen bezeichnet, die bei 23 °C eine Viskosität gemäß DIN EN ISO 3219 (Kegel/Platte-System, Geschwindigkeitsgefälle 100 s⁻¹) unter .150. mPas aufweisen.

Bevorzugt sind die Reaktivverdünner gemäß der vorliegenden Schrift ausgewählt aus der Gruppe bestehend aus multifunktionellen (Meth)acrylsäureestern und monofunktionellen (Meth)acrylsäureestern, besonders bevorzugt unter derartigen (Meth)acrylsäureestern mit einem Molgewicht bis zu 350 g/mol.

Multifunktionellen (Meth)acrylsäureester können beispielsweise Ester von α,β-ethylenisch ungesättigten Carbonsäuren, bevorzugt von (Meth)acrylsäure, besonders bevorzugt von Acrylsäure mit entsprechend mindestens zweiwertigen Polyalkoholen sein.

Derartige Polyalkohole sind beispielsweise mindestens zweiwertige Polyole, Polyether- oder Polyesterole oder Polyacrylatpolyole mit einer mittleren OH-Funktionalität von mindestens 2, bevorzugt 3 bis 10, geeignet.

Beispiele für multifunktionelle, polymerisationsfähige Verbindungen sind Ethylenglykoldiacrylat, 1,2-Propandioldiacrylat, 1,3-Propandioldiacrylat, 1,4-Butandioldiacrylat, 1,3-Butandioldiacrylat, 1,5-Pentandioldiacrylat, 1,6-Hexandioldiacrylat, 1,8-Octandioldiacrylat, Neopentylglykoldiacrylat, 1,1-, 1,2-, 1,3- und 1,4-Cyclohexandimethanoldiacry-lat, 1,2-, 1,3- oder 1,4-Cyclohexandioldiacrylat.

Weitere Beispiele für multifunktionelle, polymerisationsfähige Verbindungen sind Trimethylolpropantriacrylat, Ditrimethylolpropanpenta- oder -hexaacrylat, Pentaerythrittri- oder-tetraacrylat, Glycerindi- oder-triacrylat, sowie Di- und Polyacrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit oder Isomalt.

Weitere Beispiele für sind (Meth)Acrylate von Verbindungen der Formel (IIa) bis (IId), 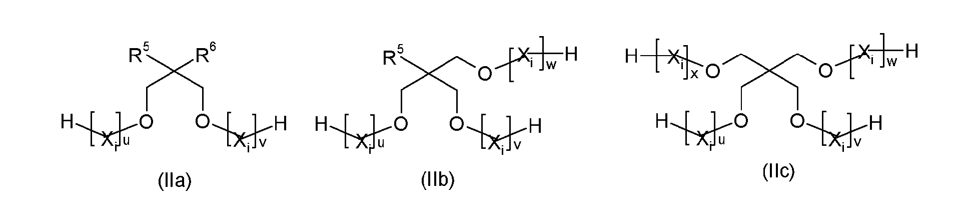 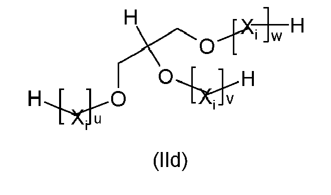 worin
R⁵ und R⁶ unabhängig voneinander Wasserstoff oder gegebenenfalls durch Aryl, Alkyl, Aryloxy, Alkyloxy, Heteroatome und/oder Heterocyclen substituiertes C₁ - C₁₈-Alkyl,
u, v, w, x unabhängig voneinander je für eine ganze Zahl von 1 bis 10, bevorzugt 1 bis 5 und besonders bevorzugt 1 bis 3 steht und
jedes Xᵢ für i = 1 bis u, 1 bis v, 1 bis w und 1 bis x unabhängig voneinander ausgewählt sein kann aus der Gruppe -CH₂-CH₂-O-, -CH₂-CH(CH₃)-O-, -CH(CH3)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂₋O-, bevorzugt aus der Gruppe -CH₂-CH₂-O-, -CH₂-CH(CH3₎-O- und -CH(CH₃)-CH₂-O-, und besonders bevorzugt -CH₂-CH₂-O-,
worin Ph für Phenyl und Vin für Vinyl steht.

Darin bedeuten gegebenenfalls durch Aryl, Alkyl, Aryloxy, Alkyloxy, Heteroatome und/oder Heterocyclen substituiertes C₁- C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, bevorzugt Methyl, Ethyl oder n-Propyl, ganz besonders bevorzugt Methyl oder Ethyl.

Bevorzugt handelt es sich dabei um (Meth)Acrylate von ein- bis zwanzigfach und besonders bevorzugt drei- bis zehnfach ethoxyliertem, propoxyliertem oder gemischt ethoxyliertem und propoxyliertem und insbesondere ausschließlich ethoxyliertem Neopentylglykol, Trimethylolpropan, Trimethylolethan oder Pentaerythrit.

Bevorzugte multifunktionelle, polymerisationsfähige Verbindungen sind Ethylenglykoldiacrylat, 1,2-Propandioldiacrylat, 1,3-Propandioldiacrylat, 1,4-Butandioldiacrylat, 1,6-Hexandioldiacrylat, Trimethylolpropantriacrylat, Pentaerythrittetraacrylat und Triacrylat von ein- bis zwanzigfach alkoxyliertem, besonders bevorzugt ethoxyliertem Trimethylolpropan.

Ganz besonders bevorzugte multifunktionelle, polymerisationsfähige Verbindungen sind 1,4-Butandioldiacrylat, 1,6-Hexandioldiacrylat, Trimethylolpropantriacrylat, Pentaerythrittetraacrylat und Triacrylat von ein- bis zwanzigfach ethoxyliertem Trimethylolpropan.

Monofunktionelle (Meth)acrylsäureester sind solche mit genau einer (Meth)acrylsäuregruppe. Beispiele dafür sind Alkyl(meth)acrylate, Cycloalkyl(meth)acrylate und (Meth)acrylate von heterocyclischen Verbindungen.

Beispiele für Alkyl(meth)acrylate sind Ester der (Meth)acrylsäure mit Alkoholen, die 1 bis 20 C-Atome aufweisen, bevorzugt C₁-C₂₀-Alkyl(meth)acrylate, besonders bevorzugt ausgewählt aus der Gruppe bestehend aus (Meth)acrylsäuremethylester, (Meth)acrylsäureethylester, (Meth)acrylsäure-n-butylester und (Meth)acrylsäure-2-ethylhexylester.

Die Alkohole können auch substituiert sein, wie es beispielsweise bei Acrylsäure-2-phenoxy-ethylester oder Acrylsäure-2-((2'-Ethoxy)-ethoxy)-ethylester der Fall ist.

Beispiele für Cycloalkyl(meth)acrylate sind Ester der (Meth)acrylsäure mit Cycloalkanolen oder Bicycloalkanolen, wobei das Cycloalkanol oder Bicycloalkanol von 3 bis 20 Kohlenstoffatomen, bevorzugt 5 bis 10 Kohlenstoffatome aufweist und gegebenenfalls mit C₁- bis C₄-Alkyl substituiert sein kann.

Beispiele für Cycloalkanol und Bicycloalkanol sind Cyclopentanol, Cyclohexanol, Cyclooctanol, Cyclododecanol, 4-Methyl cyclohexanol, 4-iso Propyl cyclohexanol, 4-tert. Butyl cyclohexanol (bevorzugt cis konfiguriert), Dihydrodicyclopentadienylalkohol, Isoborneol und Norbornylalkohol. Bevorzugt ist Isoborneol, Cyclohexanol und 4-tert. Butyl cyclohexanol.

(Meth)acrylate von heterocyclischen Verbindungen sind monofunktionellen Ester α,β-ethylenisch ungesättigter Carbonsäuren, bevorzugt von Acrylsäure oder Methacrylsäure, mit einem monofunktionellen Alkohol, der wenigstens einen gesättigten 5- oder 6-gliedrigen Heterocyclus mit einem oder zwei Sauerstoffatomen im Ring als Strukturelement aufweist.

Beispiele dafür sind zu finden in WO 2010/121978 A1, Seite 12, Zeilen 12 37, was hiermit per Bezugnahme Bestandteil der vorliegenden Offenbarung sei.

Bevorzugte (Meth)acrylate von heterocyclischen Verbindungen sind Trimethylolpropanmonoformalacrylat, Glycerinmonoformalacrylat, 4-Tetrahydropyranylacrylat, 2-Tetrahydropyranylmethylacrylat, Tetrahydrofurfurylacrylat und Mischungen davon.

### Applikation

Die Beschichtung der Leichtmetallfelgen mit den beschriebenen Beschichtungsmassen erfolgt nach üblichen, dem Fachmann bekannten Verfahren, wobei man eine Beschichtungsmasse oder eine solche enthaltende Lackformulierung auf das zu beschichtende Substrat in der gewünschten Stärke aufbringt und optional trocknet und/oder optional teilweise oder vollständig härtet. Dieser Vorgang kann gewünschtenfalls ein- oder mehrfach wiederholt werden. Das Aufbringen auf das Substrat kann in bekannter Weise, z. B. durch Tauchen, Spritzen, Spachteln, Rakeln, Bürsten, Rollen, Walzen, Gießen, Laminieren, Hinterspritzen oder Coextrudieren erfolgen, bevorzugt durch Tauchen oder Spritzen , besonders bevorzugt durch Spritzen.

Die Beschichtungsmittel können nach den unterschiedlichsten Spritzverfahren, wie z.B. Luftdruck-, Airless- oder Elektrostatik-Spritzverfahren ein- oder mehrfach appliziert werden.

Die Beschichtungsstärke liegt in der Regel in einem Bereich von etwa 3 bis 1000 g/m² und vorzugsweise 10 bis 200 g/m².

Die Applikation, Trocknung und Aushärtung der Beschichtungen erfolgt im allgemeinen unter normalen Temperaturbedingungen, d.h. ohne Erhitzung der Beschichtung, kann aber auch bei erhöhter Temperatur appliziert werden (siehe nächster Absatz). Die Beschichtungsmassen können jedoch auch zur Herstellung von Beschichtungen eingesetzt werden, die nach Applikation bei erhöhter Temperatur, z.B. bei 40 - 250°C, vorzugsweise 40 - 150°C und insbesondere bei 40 bis 100°C getrocknet und ausgehärtet werden. Dies ist begrenzt durch die Thermostabilität des Substrats.

Es stellt eine bevorzugte Ausführungsform dar, die Beschichtungsmasse mit einer erhöhten Temperatur, beispielsweise 30 bis 80, bevorzugt 40 bis 60°C aufzubringen, wobei das Substrat eine niedrigere Temperatur aufweist. Dies hat den Vorteil, daß die Beschichtungsmasse durch die höhere Temperatur bei der Applikation eine niedrigere Viskosität aufweist und durch das Abkühlen auf dem Substrat die Standeigenschaften (geringe Ablaufneigung) verbessert sind.

### Härtung

Die Strahlungshärtung erfolgt mit energiereichem Licht, z.B. UV-Licht oder Elektronenstrahlen, bevorzugt UV-Licht. Die Strahlungshärtung kann bei höheren Temperaturen erfolgen. Beispielsweise kann dabei eine Temperatur oberhalb der Tg des strahlungshärtbaren Bindemittels sinnvoll sein.

Strahlungshärtung heißt hier die radikalische Polymerisation von polymerisierbaren Verbindungen infolge einer elektromagnetischen und/oder korpuskularen Strahlung, bevorzugt UV-Licht im Wellenlängenbereich von λ=200 bis 700 nm und/oder Elektronenstrahlung im Bereich von 150 bis 300 keV und besonders bevorzugt mit einer Strahlungsdosis von mindestens 80, bevorzugt 80 bis 3000 mJ/cm².

Die Trocknung und Aushärtung der Beschichtungen erfolgt im allgemeinen unter normalen Temperaturbedingungen, d.h. ohne Erhitzung der Beschichtung. Die Beschichtungsmassen können jedoch auch zur Herstellung von Beschichtungen eingesetzt werden, die nach Applikation bei erhöhter Temperatur, z.B. bei 40 - 150°C, vorzugsweise 40 - 100°C und insbesondere bei 40 bis 80°C getrocknet und ausgehärtet werden.

Weiterhin wird ein Verfahren zum Beschichten von Substraten offenbart, bei dem man die beschriebenen Beschichtungsmassen oder solche enthaltende Lackformulierungen, gegebenenfalls mit thermisch härtbaren Harzen versetzt, auf das Substrat aufbringt, trocknet, und anschließend mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur.

Gegebenenfalls kann, wenn mehrere Schichten des Beschichtungsmittels übereinander aufgetragen werden, nach jedem Beschichtungsvorgang eine Trocknung und/oder Strahlungshärtung erfolgen.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von λ=200 bis 700 nm strahlt, besonders bevorzugt von λ=200 bis 500 nm und ganz besonders bevorzugt λ=250 bis 400 nm, oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen, LED-Lampen oder Excimerstrahler. Die üblicherweise zur Vernetzung ausreichende Strahlungsdosis bei UV-Härtung liegt im Bereich von 80 bis 3000 mJ/cm².

Selbstverständlich sind auch mehrere Strahlungsquellen für die Härtung einsetzbar, z.B. zwei bis vier.

Diese können auch in jeweils unterschiedlichen Wellenlängebereichen strahlen.

Da die Leichtmetallfelgen zumindest mit der Schicht (A) von allen Seiten mit Beschichtungsmassen bedeckt sind, erfolgt die Härtung auch von den beschichteten Seiten

Die Bestrahlung kann bevorzugt auch unter Ausschluß von Sauerstoff, z. B. unter InertgasAtmosphäre, durchgeführt werden. Als Inertgase eignen sich vorzugsweise Stickstoff, Edelgase, Kohlendioxid, oder Verbrennungsgase. Des weiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

Wenn die Härtung durch UV-Bestrahlung statt Elektronenstrahlen erfolgt, so versteht es sich von selbst, daß die strahlungshärtbaren Beschichtungsmasse jeweils mindestens einen Photoinitiator enthalten, der in einem Wellenlängenbereich der eingestrahlten Strahlung aktivierbar ist, und für den die in den Beschichtungsmassen enthaltenen Inhaltsstoffe durchlässig sind.

In Betracht kommen solche Photoinitiatoren, wie sie beschrieben sind in WO 2006/005491 A1, Seite 21, Zeile 18 bis Seite 22, Zeile 2 (entspricht US 2006/0009589 A1, Absatz [0150]), was hiermit durch Bezugnahme Bestandteil der vorliegenden Offenbarung sei.

Exemplarisch sei ein Verfahren zur Beschichtung von Leichtmetallfelgen illustriert, umfassend zumindest die Schritte:
Bereitstellen eines mechanisch vorbereiteten Felgenkörpers,
Beschichten des Felgenkörpers mit mindestens einer Konversionsbeschichtung und anschließend Trocknung,
Beschichten mit mindestens einer Beschichtungsmasse, die mindestens eine strahlungshärtbare Verbindung und optional mindestens ein Korrosionsschutzpigment und/oder -inhibitor enthält, wobei die Beschichtungsmasse eine Säurezahl von 20 bis 120 mg KOH/g aufweist, optional Ablüften der so erhaltenen Beschichtung (A1),
Beschichten mit mindestens einer Beschichtungsmasse, die mindestens eine strahlungshärtbare Verbindung und mindestens ein Korrosionsschutzpigment und/oder-inhibitor enthält, anschließend zumindest teilweise Härtung durch Strahlung, gefolgt von Beschichten mit mindestens einer wasserbasierten Zweikomponenten-Polyurethan-Beschichtungsmassen, enthaltend mindestens ein Pigment und/oder Metallic-Flakes, anschließend Ablüften und Trocknen der Beschichtung, beispielsweise bei 60 bis 100 °C über ein Dauer von 10 bis 30 min,
Beschichten mit mindestens einer strahlungshärtbaren Beschichtungsmasse, enthaltend mindestens ein strahlungshärtbare Verbindung und optional ein oder mehrere lacktypische Additive,
gefolgt von vollständiger Härtung der Lackschichten durch Strahlung.

Exemplarisch sei ein Verfahren zur Beschichtung von Leichtmetallfelgen illustriert, umfassend zumindest die Schritte:
Bereitstellen eines mechanisch vorbereiteten Felgenkörpers,
Beschichten des Felgenkörpers mit mindestens einer Konversionsbeschichtung und anschließend Trocknung,
Beschichten mit mindestens einer Beschichtungsmasse, die mindestens eine strahlungshärtbare Verbindung und optional mindestens ein Korrosionsschutzpigment und/oder -inhibitor enthält, wobei die Beschichtungsmasse eine Säurezahl von 20 bis 120 mg KOH/g aufweist, optional Ablüften der so erhaltenen Beschichtung (A1),
Beschichten mit mindestens einer Beschichtungsmasse, die mindestens eine strahlungshärtbare Verbindung und mindestens ein Korrosionsschutzpigment und/oder-inhibitor enthält, anschließend zumindest teilweise Härtung durch Strahlung, gefolgt von Beschichten mit mindestens einer wasserbasierten strahlungshärtbaren Beschichtungsmasse, enthaltend mindestens ein Pigment und/oder Metallic-Flakes,
anschließend zumindest teilweise Härtung durch Strahlung,
Beschichten mit mindestens einer strahlungshärtbaren Beschichtungsmasse, enthaltend mindestens ein strahlungshärtbare Verbindung und optional ein oder mehrere lacktypische Additive,
gefolgt von vollständiger Härtung der Lackschichten durch Strahlung.

## Patentansprüche

1. Verfahren zur Beschichtung von Leichtmetallfelgen, **dadurch gekennzeichnet, daß** man einen mechanisch bearbeiteten Rohling einer Leichtmetallfelge mit mindestens einer Beschichtungsmasse beschichtet, die radikalisch polymerisierbare reaktive Gruppen enthält, und diese Beschichtungsmasse durch Strahlung härtet.

2. Verfahren nach Anspruch 1, **dadurch gekennzeichnet, daß** man die mechanisch bearbeiteten Rohlinge mit mindestens drei Schichten, umfassend Grundierung (A), Basislack (B) und Klarlack (C), von jeweils unterschiedlichen Beschichtungsmassen beschichtet.

3. Verfahren nach Anspruch 2, **dadurch gekennzeichnet, daß** man nach dem Auftragen der einzelnen Schichten lediglich trocknet und optional nicht mehr als teilweise härtet und eine vollständige Härtung erst abschließend durchzuführt.

4. Verfahren nach Anspruch 2 oder 3, **dadurch gekennzeichnet, daß** die Grundierung (A) mindestens eine strahlungshärtbare Beschichtungsmasse mit einer Säurezahl gemäß DIN EN ISO 3682 (potentiometrisch) von .20. bis .120. mg KOH/g umfaßt, die direkt auf das Substrat aufgetragen wird.

5. Verfahren nach einem der Ansprüche 2 bis 4, **dadurch gekennzeichnet, daß** die Grundierung (A) mindestens eine strahlungshärtbare Beschichtungsmasse umfaßt, enthaltend
(A2a) mindestens ein Bindemittel ausgewählt aus der Gruppe bestehend aus aliphatischen Urethan(meth)acrylaten, aromatischen Urethan(meth)acrylaten und Epoxy(meth)acrylaten,
(A2b) mindestens einen Reaktivverdünner und
(A2c) bevorzugt mindestens ein Korrosionsschutzpigment und/oder-inhibitor.

6. Verfahren nach einem der Ansprüche 2 bis 5, **dadurch gekennzeichnet, daß** die Schicht für den Basislack (B) mindestens eine wasserbasierte Zweikomponentenbeschichtungsmasse, enthaltend mindestens ein Pigment und/oder Metallic-Flakes, enthält.

7. Verfahren nach einem der Ansprüche 2 bis 5, **dadurch gekennzeichnet, daß** die Schicht für den Basislack (B) mindestens eine wasserbasierte strahlungshärtbare Beschichtungsmasse, enthaltend mindestens ein Pigment und/oder Metallic-Flakes, enthält.

8. Verfahren nach einem der Ansprüche 6 oder 7, **dadurch gekennzeichnet, daß** die Beschichtungsmasse für die Schicht für den Basislack (B) einen Festkörpergehalt zwischen 20 und 80 Gew% aufweist.

9. Verfahren nach einem der vorstehenden Ansprüche, **dadurch gekennzeichnet, daß** man eine strahlungshärtbare Klarlackschicht auf die Außenseite der Leichtmetallfelgen aufbringt.

10. Verfahren nach Anspruch 9, **dadurch gekennzeichnet, daß** die strahlungshärtbare Klarlackschicht eine Doppelbindungsdichte von radikalisch polymerisierbaren reaktiven Gruppen pro Masse Beschichtungsmasse von mindestens 1 mol/kg aufweist.

11. Verfahren nach einem der vorstehenden Ansprüche, **dadurch gekennzeichnet, daß** man die Härtung der strahlungshärtbaren Beschichtungsmasse unter Inertgas durchführt.

12. Verfahren nach einem der vorstehenden Ansprüche, **dadurch gekennzeichnet, daß** man zwischen Härtung des Basislacks (B) und Auftragen des Klarlacks (C) den gehärteten Basislack (B) auf der äußeren Sichtseite der Felge bis zum blanken Metall entfernt und auf diese Metallschicht Klarlack aufträgt.
